# EUROPÄISCHE PATENTSCHRIFT

(11) **EP 2 828 531 B1**
(45) Veröffentlichungstag und Bekanntmachung des Hinweises auf die Patenterteilung: **23.08.2017**
(21) Anmeldenummer: 13708389.5
(22) Anmeldetag: 27.02.2013
(51) Int. Cl.: F04D 17/12, F02C 6/08, F04D 29/58, F04D 29/44

(54) **MEHRSTUFIGE RADIALVERDICHTEREINHEIT MIT ENTNAHME VON GAS IN EINER VERDICHTERSTUFE**
MULTI-STAGE RADIAL COMPRESSOR UNIT COMPRISING A GAS BLEED IN A COMPRESSOR STAGE
ENSEMBLE COMPRESSEUR RADIAL MULTI-ÉTAGES À SOUTIRAGE DE GAZ DANS UN ÉTAGE DE COMPRESSION

(30) Priorität: 20.03.2012 DE 102012204403
(43) Veröffentlichungstag der Anmeldung: 28.01.2015
(73) Patentinhaber: MAN Diesel & Turbo SE, 86153 Augsburg (DE)
(72) Erfinder: BUECHE, Dirk, 79793 Wutöschingen (DE); KLEYNHANS, George, 8180 Bülach (CH); MISCHO, Bob, 8050 Zürich (CH)
(86) Internationale Anmeldenummer: PCT/EP2013/053900
(87) Internationale Veröffentlichungsnummer: WO 2013/139568

(56) Entgegenhaltungen:
- WO-A1-2007/110378
- WO-A2-2010/084422
- GB-A- 956 731
- JP-A- H09 273 495
- US-A- 6 129 524

## Beschreibung

Die Erfindung betrifft eine Radialverdichtereinheit nach dem Oberbegriff des Anspruchs 1.

Aus der DE 37 29 486 C1 ist eine Verdichtereinheit bzw. Kompressoreinheit zur Verdichtung von Gas bekannt, die mehrere Verdichterstufen und einen als Elektromotor ausgebildeten Antrieb aufweist. Nach diesem Stand der Technik sind die Verdichterstufen und der Antrieb in einem gemeinsamen, gasdichten Gehäuse angeordnet. In der DE 37 29 486 C1 wird vorgeschlagen, verdichtetes Gas über einen Oberflächenkühler zu führen, um das verdichtete Gas zu kühlen. Hierbei wirkt die Abkühlung des verdichteten Gases mithilfe des Oberflächenkühlers zwischen zwei Verdichterstufen.

Aus der DE 10 2007 019 264 A1 ist es bekannt, im Bereich einer Verdichterstufe einer Verdichtereinheit verdichtetes Gas zu entnehmen und das verdichtete Gas als Kühlgas für ein zu kühlendes Bauteil zu verwenden. Dabei soll das als Kühlgas entnommene Gas frei von Verunreinigungen, wie zum Beispiel Partikeln und/oder Flüssigkeiten, sein. Ferner ist es wünschenswert, dass das entnommene Gas einen möglichst hohen Druck aufweist. Um ein möglichst reines Kühlgas aus einer Verdichterstufe der Verdichtereinheit zu entnehmen, wird nach dem Stand der Technik gemäß DE 10 2007 019 264 A1 vorgeschlagen, das Kühlgas über einen Entnahmekanal zu entnehmen, der benachbart zu einem Impeller, der auch als Laufrad bezeichnet wird, und benachbart zu einem stromabwärts des Impellers verlaufenden Diffusorabschnitt eines Strömungskanals von einem Radseitenraum abzweigt. Hiermit kann zwar ein relativ reines Kühlgas, welches wenige Verunreinigungen enthält, entnommen werden, das entnommene Kühlgas verfügt jedoch nur über einen relativ geringen Druck.

Es besteht Bedarf an einer Radialverdichtereinheit, an welcher im Bereich einer Verdichterstufe Kühlgas entnommen werden kann, welches einerseits relativ geringe Verunreinigungen und andererseits einen relativ hohen Druck aufweist. Hierzu ist bereits aus der JPH09273495 A bekannt, in einem mehrstufigen Radialverdichter Gas aus einem Umlenkabschnitt zu entnehmen. Hiervon ausgehend liegt der Erfindung die Aufgabe zu Grunde, eine neuartige Radialverdichtereinheit zu schaffen.

Diese Aufgabe wird durch eine Radialverdichtereinheit gemäß Anspruch 1 gelöst. Erfindungsgemäß ist das Kühlgas im Bereich einer Zwischenwand der Verdichterstufe aus dem Rückführabschnitt des Strömungskanals der Verdichterstufe über mindestens einen Entnahmekanal mit einer in eine Vorderkante oder in eine Saugseite einer oder mehrerer Leitschaufeln eingebrachten Entnahmeöffnung entnehmbar. Hierdurch kann Kühlgas einerseits mit relativ geringen Verunreinigungen und andererseits mit einem ausreichend hohen Druck entnommen und bereitgestellt werden.

Nach einer ersten vorteilhaften Weiterbildung der Erfindung ist das Kühlgas zusätzlich aus dem Umlenkabschnitt und/oder dem Rückführabschnitt des Strömungskanals der Verdichterstufe entnehmbar, nämlich über mindestens ein in den Strömungskanal hineinragendes Entnahmerohr mit einer benachbart zur Zwischenwand positionierten Entnahmeöffnung.

Mit den oben beschriebenen Merkmalen der Erfindung ist es auf einfache konstruktive Art und Weise möglich, das Kühlgas benachbart zur Zwischenwand aus dem Umlenkabschnitt und/oder dem Rückführabschnitt des Strömungskanals zu entnehmen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen schematisierten Querschnitt durch eine Radialverdichtereinheit zur Verdichtung von Gas;
- Fig. 2:: einen Ausschnitt aus einer Radialverdichtereinheit im Bereich einer Verdichterstufe derselben, der einen weiterführenden Aspekt der Erfindung zeigt;
- Fig. 3:: einen Ausschnitt aus einer erfindungsgemäßen Radialverdichtereinheit im Bereich einer Verdichterstufe derselben.

Die hier vorliegende Erfindung betrifft eine Radialverdichtereinheit zur Verdichtung von Gas, wie sie zum Beispiel bei der Erdgasförderung im Offshore-Bereich zum Einsatz kommt.

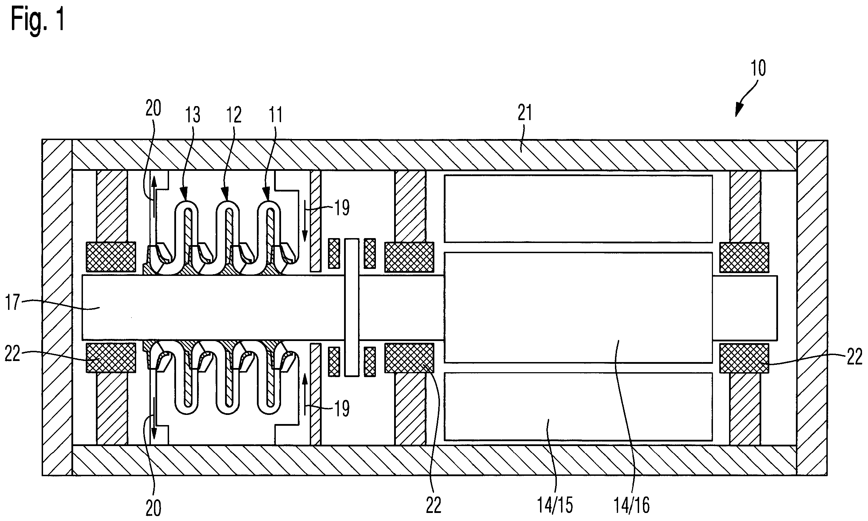

Fig. 1 zeigt einen schematisierten Querschnitt durch eine Radialverdichtereinheit 10 zur Verdichtung von Gas, wobei die Radialverdichtereinheit 10 mehrere Verdichterstufen 11, 12 und 13 aufweist, die von einem als Elektromotor ausgebildeten Antrieb 14 angetrieben werden, wobei von dem als Elektromotor ausgebildeten Antrieb 14 einerseits ein Ständer 15 und andererseits ein Läufer 16 gezeigt ist.

Der Antrieb 14 treibt eine Welle 17 der Radialverdichtereinheit 10 an, wobei mit der Welle 17 sogenannte Impeller 18 der Verdichterstufen 11, 12 und 13 gekoppelt sind, sodass die Impeller 18 der Verdichterstufen 11, 12 und 13 vom Antrieb 14 der Radialverdichtereinheit 10 angetrieben werden. Die Impeller 18 der Verdichterstufen 11, 12 und 13 werden auch als Laufräder bezeichnet.

In Strömungsrichtung des zu verdichtenden Gases gesehen stromabwärts des Impellers 18 der jeweiligen Verdichterstufe 11, 12, 13 schließt sich jeweils ein Strömungskanal 24 der jeweiligen Verdichterstufe 11, 12, 13 an.

Die Radialverdichtereinheit 10 der Fig. 1 verfügt im gezeigten Ausführungsbeispiel exemplarisch über vier Verdichterstufen 11, 12 und 13, wobei unverdichtetes Gas im Sinne des Pfeils 19 den Verdichterstufen 11, 12 und 13 zur Verdichtung zugeführt wird, und wobei verdichtetes Gas im Sinne des Pfeils 20 abgeführt wird. Die Verdichterstufen 11, 12 und 13 sind hintereinander geschaltet und dienen der sukzessiven Verdichtung des Gases, wobei die Verdichterstufe 11 auch als Niederdruckverdichterstufe, die Verdichterstufe 12 auch als Mitteldruckverdichterstufe und die Verdichterstufe 13 auch als Hochdruckverdichterstufe bezeichnet werden kann.

Die Verdichterstufen 11, 12 und 13 der Radialverdichtereinheit 10 sind zusammen mit dem als Elektromotor ausgebildeten Abtrieb 14 in einem gemeinsamen Gehäuse 21 aufgenommen, wobei die Welle 17 im Gehäuse 21 über Lager 22 gelagert ist.

Im Betrieb der Radialverdichtereinheit ist es erforderlich, Baugruppen derselben, insbesondere den Antrieb 14, zu kühlen, wozu einer Verdichterstufe der Radialverdichtereinheit 10 verdichtetes Gas als Kühlgas entnehmbar ist und zur Kühlung der zu kühlenden Baugruppe, insbesondere des zu kühlenden Antriebs 14, in Richtung auf die zu kühlende Baugruppe förderbar ist.

Hierbei ist von Bedeutung, dass das Kühlgas derart aus einer Verdichterstufe entnommen wird, dass das Kühlgas einerseits wenige Verunreinigungen aufweist und andererseits über einen ausreichend hohen Druck verfügt, um einerseits die zu kühlende Baugruppe durch das Kühlgas nicht zu verunreinigen und um andererseits eine möglichst effektive Kühlung der zu kühlenden Baugruppe zu gewährleisten.

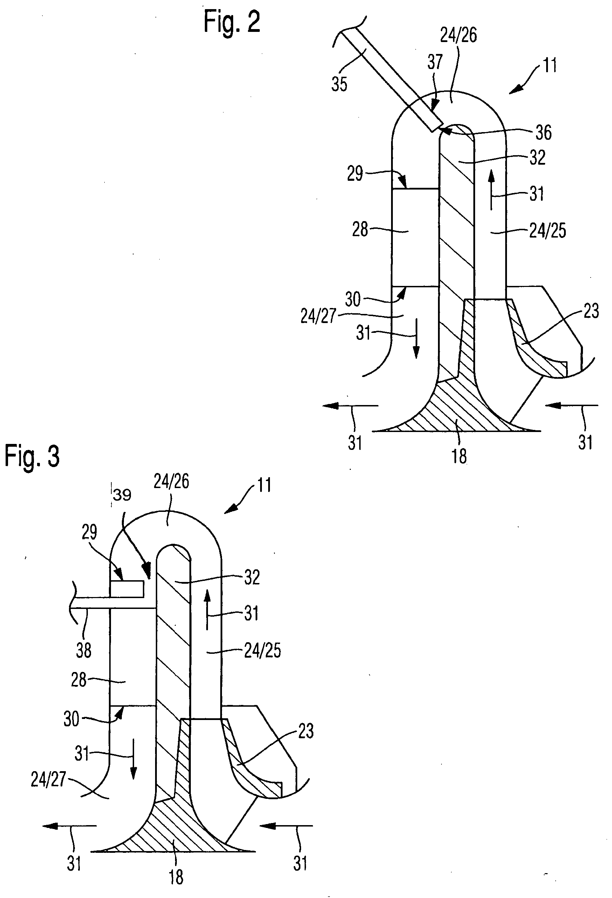

Fig. 2 bis 3 zeigen jeweils Details im Bereich einer der Verdichterstufen, nämlich der Verdichterstufe 11, wobei in Fig. 2 bis 3 einerseits der Impeller 18 der jeweiligen Verdichterstufe 11 gezeigt ist, der über Laufschaufeln 23 verfügt, und wobei weiterhin der sich in Strömungsrichtung des zu verdichtenden Gases gesehen stromabwärts des Impellers 18 anschließende Strömungskanal 24 gezeigt ist, wobei der Strömungskanal 24 mehrere Abschnitte aufweist, nämlich einen sich unmittelbar an den Impeller 18 anschließenden Diffusorabschnitt 25, einen sich an den Diffusorabschnitt 25 anschließenden Umlenkabschnitt 26 sowie einen sich an den Umlenkabschnitt 26 anschließenden Rückführabschnitt 27. Im Rückführabschnitt 27 sind feststehende Leitschaufeln 28 positioniert, von denen schematisiert einerseits eine Eintrittskante 29 und andererseits eine Austrittskante 30 gezeigt ist. Die Strömungsrichtung des Gases durch die Verdichterstufe 11 ist durch Pfeile 31 visualisiert.

Der Diffusorabschnitt 25, der Umlenkabschnitt 26 und der Rückführabschnitt 27 des Strömungskanals 24 der Verdichterstufe 11 werden radial innen zumindest abschnittsweise von einer statorseitigen, nabenseitigen Zwischenwand 32 begrenzt.

Um nun möglichst reines Kühlgas mit einem ausreichend hohen Druck aus der Verdichterstufe 11 zu entnehmen, wird erfindungsgemäß vorgeschlagen, das Kühlgas benachbart zur Zwischenwand 32 der Verdichterstufe 11 aus dem Rückführabschnitt 27 des Strömungskanals 24 der Verdichterstufe 11 zu entnehmen und der zu kühlenden Baugruppe zuzuführen.

Fig. 2 zeigt zunächst einen Aspekt einer Weiterbildung der Erfindung, in welcher das Kühlgas aus dem Umlenkabschnitt 26 und/oder dem Rückführabschnitt 27 des Strömungskanals 24 der Verdichterstufe 11 entnommen wird, nämlich über mindestens ein in den Strömungskanal 26 im Bereich des Umlenkabschnitts 26 und/oder des Rückführabschnitts 27 hineinragendes Entnahmerohr 35, welches eine benachbart zur Zwischenwand 32 positionierte Entnahmeöffnung 36 aufweist. Die Entnahmeöffnung 36 des Entnahmerohrs 35, über die das Kühlgas im Bereich der Zwischenwand 32 aus der Verdichterstufe 11 entnommen wird, ist dabei in einem Übergangsbereich zwischen dem Umlenkabschnitt 26 und dem Rückführabschnitt 27 positioniert, sodass das Kühlgas im Übergangsbereich und damit im Bereich des Umlenkabschnitts 26 und/oder des Rückführabschnitts 27 aus dem Strömungskanal 24 entnommen wird.

Das oder jedes in den Strömungskanal 24 hineinragende Entnahmerohr 35 verfügt zumindest an dem Abschnitt 37, der in den Strömungskanal 24 hinein ragt, über eine profilierte, strömungsführende Außenwand, um eine Beeinträchtigung der Strömung durch das in den Strömungskanal 24 hineinragende Entnahmerohr 35 auszuschließen.

Eine erfindungsgemäße Ausführung zeigt Fig. 3, wobei in Fig. 3 das Kühlgas aus dem Rückführabschnitt 27 des Strömungskanals 24 der Verdichterstufe 11 entnommen wird, nämlich über mindestens einen Entnahmekanal 38, dessen Entnahmeöffnung 39 in eine Vorderkante 29 einer Leitschaufel 28 eingebracht ist. Dabei ist, wie Fig. 3 entnommen werden kann, diese in die Vorderkante oder der Saugseite der Leitschaufel 28 eingebrachte Entnahmeöffnung 39 für den Entnahmekanal 38 benachbart zur Zwischenwand 32 in die Vorderkante 29 der Leitschaufel 28 eingebracht.

Mit allen erfindungsgemäßen Varianten kann Kühlgas derart aus einer Verdichterstufe 11 entnommen werden, dass das Kühlgas geringe Verunreinigungen und einen ausreichend hohen Druck aufweist. Hierdurch ist einerseits eine effektive Kühlung einer zu kühlenden Baugruppe der Radialverdichtereinheit 10 möglich und andererseits besteht keine Gefahr, dass die zu kühlende Baugruppe durch das Kühlgas verunreinigt wird.

### Bezugszeichenliste

- 10: Radialverdichtereinheit
- 11: Verdichterstufe
- 12: Verdichterstufe
- 13: Verdichterstufe
- 14: Antrieb / Elektromotor
- 15: Ständer
- 16: Läufer
- 17: Welle
- 18: Impeller
- 19: Gasströmung
- 20: Gasströmung
- 21: Gehäuse
- 22: Lager
- 23: Laufschaufel
- 24: Strömungskanal
- 25: Diffusorabschnitt
- 26: Umlenkabschnitt
- 27: Rückführabschnitt
- 28: Leitschaufel
- 29: Eintrittskante
- 30: Austrittskante
- 31: Gasströmung
- 32: Trennwand
- 33: Entnahmeöffnung / Spalt
- 34: Entnahmekanal
- 35: Entnahmerohr
- 36: Entnahmeöffnung
- 37: Abschnitt
- 38: Entnahmekanal
- 39: Entnahmeöffnung

## Patentansprüche

1. Radialverdichtereinheit zur Verdichtung von Gas, mit mehreren Verdichterstufen (11, 12, 13), wobei jede Verdichterstufe (1,1, 12, 13) einen Impeller (18) mit Laufschaufeln (23) und einen in Strömungsrichtung des zu verdichtenden Gases gesehen stromabwärts des Impellers (18) angeordneten Strömungskanal (24) mit einem Diffusorabschnitt (25), einem Umlenkabschnitt (26) und einem Rückführabschnitt (27) mit Leitschaufeln (28) aufweist, wobei aus einer Verdichterstufe (11) verdichtetes Gas als Kühlgas entnehmbar und zur Kühlung eines zu kühlenden Bauteils in Richtung auf das zu kühlende Bauteil förderbar ist, **dadurch gekennzeichnet, dass** das Kühlgas benachbart zu einer Zwischenwand (32) der Verdichterstufe (11) aus dem Rückführabschnitt (27) des Strömungskanals (24) der Verdichterstufe (11) über mindestens einen Entnahmekanal (38) mit einer in eine Vorderkante (29) oder in eine Saugseite einer oder mehrerer Leitschaufeln (28) eingebrachten Entnahmeöffnung (39) entnehmbar ist.

2. Radialverdichtereinheit nach Anspruch 1, **dadurch gekennzeichnet, dass** die Zwischenwand (32), im Bereich derer das Kühlgas entnehmbar ist, zumindest den Umlenkabschnitt (26) und den Rückführabschnitt (27) radial innen zumindest abschnittsweise begrenzt.

3. Radialverdichtereinheit nach Anspruch 1 oder 2, **dadurch gekennzeichnet, dass** das Kühlgas zusätzlich aus dem Umlenkabschnitt (26) und/oder dem Rückführabschnitt (27) des Strömungskanals (24) der Verdichterstufe (11) entnehmbar ist, nämlich über mindestens ein in den Strömungskanal hineinragendes Entnahmerohr (35) mit einer benachbart zur Zwischenwand (32) positionierten Entnahmeöffnung (36).

4. Radialverdichtereinheit nach Anspruch 3, **dadurch gekennzeichnet, dass** die Entnahmeöffnung (36) des Entnahmerohrs (35) in einem Übergangsbereich zwischen dem Umlenkabschnitt (26) und dem Rückführabschnitt (27) benachbart zur Zwischenwand (32) positioniert ist.

5. Radialverdichtereinheit nach Anspruch 3 oder 4, **dadurch gekennzeichnet, dass** ein in den Strömungskanal (24) hineinragender Abschnitt (37) des Entnahmerohrs (35) eine profilierte, strömungsführende Außenwand aufweist.

6. Radialverdichtereinheit nach Anspruch 1, **dadurch gekennzeichnet, dass** die Entnahmeöffnung (39) des Entnahmekanals (38) benachbart zur Zwischenwand (32) in die Vorderkante (29) der Leitschaufel (28) eingebracht ist.

7. Radialverdichtereinheit nach Anspruch 6, **dadurch gekennzeichnet, dass** die Vorderkante (29) der Leitschaufel (28) im Bereich eines Umlenkabschnittes (26) liegt.

## Claims

1. A radial compressor unit for compressing gas, having a plurality of compressor stages (11, 12, 13), wherein each compressor stage (11, 12, 13) comprises an impeller (18) with moving blades (23) and a flow duct (24) arranged seen in flow direction of the gas to be compressed downstream of the impeller (18) with a diffuser section (25), a deflection section (26) and a return section (27) with guide blades (28), wherein compressed gas as cooling gas can be extracted from a compressor stage (11) and can be delivered for cooling a component to be cooled in the direction of the component to be cooled, **characterized in that** the cooling gas can be extracted adjacently to an intermediate wall (32) of the compressor stage (11) from the return section (27) of the flow duct (24) of the compressor stage (11) via at least one extraction duct (38) with an extraction opening (39) introduced into a front edge (29) or into a suction side of one or a plurality of guide blades (28).

2. The radial compressor unit according to claim 1, **characterized in that** the intermediate wall (32), in the region of which the cooling gas is extractable, at least delimits the deflection section (26) and the return section (27) radially inside at least in sections.

3. The radial compressor unit according to claim 1 or 2, **characterized in that** the cooling gas can be additionally extracted from the deflection section (26) and/or the return section (27) of the flow duct (24) of the compressor stage (11), namely via at least one extraction pipe (35) projecting into the flow duct with an extraction opening (36) positioned adjacent to the intermediate wall (32).

4. The radial compressor unit according to claim 3, **characterized in that** the extraction opening (36) of the extraction pipe (35) is positioned in a transition region between the deflection section (26) and the return section (27) adjacent to the intermediate wall (32).

5. The radial compressor unit according to claim 3 or 4, **characterized in that** a section (37) of the extraction pipe (35) projecting into the flow duct (24) comprises a profiled, flow-guiding outer wall.

6. The radial compressor unit according to claim 1, **characterized in that** the extraction opening (39) of the extraction duct (38) is introduced into the front edge (29) of the guide blade (28) adjacent to the intermediate wall (32).

7. The radial compressor unit according to claim 6, **characterized in that** the front edge (29) of the guide blade (28) lies in the region of a deflection section (26).

## Revendications

1. Unité de compresseur radial pour la compression de gaz, comportant plusieurs étages de compresseur (11, 12, 13), dans laquelle chaque étage de compresseur (11, 12, 13) présente une turbine (18) avec des pales mobiles (23) et un canal d'écoulement (24) disposé dans la direction d'écoulement du gaz à compresser vu en aval de la turbine (18) comportant une portion de diffuseur (25), une portion de dérivation (26) et une portion de réintroduction (27) avec des pales directrice (28), dans laquelle le gaz comprimé sortant d'un étage de compresseur (11) peut être prélevé comme un gaz de refroidissement et peut être transporté pour le refroidissement d'un composant à refroidir dans la direction du composant à refroidir, **caractérisé en ce que** le gaz de refroidissement peut être prélevé à proximité d'une paroi intermédiaire(32) de l'étage de compresseur (11) hors de la portion de réintroduction (27) du canal d'écoulement (24) de l'étage de compresseur (11) par l'intermédiaire d'au moins un canal de prélèvement (38) avec une ouverture de prélèvement (39) ménagée dans une arête avant (29) ou dans un côté d'aspiration d'une ou plusieurs pales directrices (28).

2. Unité de compresseur radial selon la revendication 1, **caractérisée en ce que** la paroi intermédiaire (23), au niveau de laquelle le gaz de refroidissement peut être prélevé, délimite au moins la portion de dérivation (26) et la portion de réintroduction (27) radialement à l'intérieur au moins par portions.

3. Unité de compresseur radial selon la revendication 1 ou 2, **caractérisée en ce que** le gaz de refroidissement peut être prélevé en outre à partir de la portion de dérivation (26) et/ou de la portion de réintroduction (27) du canal d'écoulement (24) de l'étage de compresseur (11), à savoir par l'intermédiaire d'au moins un tuyau de prélèvement (35) dépassant à l'intérieur du canal d'écoulement avec une ouverture de prélèvement (36) positionnée à proximité de la paroi intermédiaire(32).

4. Unité de compresseur radial selon la revendication 3, **caractérisée en ce que** l'ouverture de prélèvement (36) du tuyau de prélèvement (35) est positionnée dans une zone de transition entre la portion de dérivation (26) et la portion de réintroduction (27) à proximité de la paroi intermédiaire (32).

5. Unité de compresseur radial selon la revendication 3 ou 4, **caractérisée en ce qu'**une portion (37) du tuyau de prélèvement (35) dépassant à l'intérieur du canal d'écoulement (24) présente une paroi extérieure profilée, guidant l'écoulement.

6. Unité de compresseur radial selon la revendication 1, **caractérisée en ce que** l'ouverture de prélèvement (39) du canal de prélèvement (38) est ménagée à proximité de la paroi intermédiaire (32) dans l'arête avant (29) de la pale directrice (28).

7. Unité de compresseur radial selon la revendication 6, **caractérisée en ce que** l'arête avant (29) de la pale directrice (28) est située au niveau d'une portion de dérivation (26).
